# EUROPEAN PATENT SPECIFICATION

(11) **EP 3 126 079 B1**
(45) Date of publication and mention of the grant of the patent: **01.09.2021**
(21) Application number: 15772827.0
(22) Date of filing: 02.04.2015
(51) Int. Cl.: B22F 9/08, C21C 5/52, C21C 7/00, C22C 38/18, C22C 33/02, B22F 9/10, C22C 1/02, C22C 1/03, C22C 27/06, C22C 33/04, C22C 33/06, C22C 38/02, C22C 38/56, C22C 1/04

(54) **GRANULATION OF MOLTEN FERROCHROMIUM**
GRANULIERUNG VON GESCHMOLZENEM FERROCHROM
GRANULATION DE FERROCHROME FONDU

(30) Priority: 03.04.2014 EP 14163382
(43) Date of publication of application: 08.02.2017
(73) Proprietor: Uvån Holding AB, 164 40 Kista (SE)
(72) Inventor: LUNDSTRÖM, Per-Åke, S-183 57 Täby (SE)
(74) Representative: Hynell Intellectual Property AB
(86) International application number: PCT/SE2015/050408
(87) International publication number: WO 2015/152814

(56) References cited:
- EP-A1- 2 578 703
- EP-A1- 2 845 671
- EP-A2- 1 493 517
- JP-A- H04 337 017
- JP-A- 2000 073 109
- US-A- 3 761 548
- US-A- 4 011 290
- US-A- 4 374 074
- US-A- 4 402 884
- US-A- 5 258 053
- US-B1- 6 287 362
- None

## Description

### TECHNICAL FIELD

The invention relates to a method of producing granulated ferrochromium having an improved size distribution and improved properties for the alloying of steel and iron melts.

### BACKGROUND OF THE INVENTION

Metal granulation in water is a well-established method for rapid solidification of liquid metal into a medium sized product form. The Granshot® process has been developed for the direct production of ready to use material for the steel industry, in particular crude iron, ferronickel and ferrochromium. The method is disclosed in EP 402 665 and US 3 888 956. The molten metal is directed from a tundish to a refractory target. The metal strikes the target, splits up and is radially distributed over the cooling water in the tank. The droplets solidify in the tank and are recovered from the bottom of the tank. The size of the granules depends on several factors such as melt composition and impact conditions. The main fraction obtained lies within the size range of 5-25 mm. However, the amount of fines defined as the granules having a maximum dimension of ≤ 8 mm may be as high as 20 %.

Although the grain sizes obtained by the above mentioned method allow a rapid dissolution of the granular metal in a steel melt there is a drawback in that there are limited possibilities to adjust the mean grain size and the grain size distribution.

SE 439 783 B discloses a method for the manufacturing of water-blast high carbon ferrochromium granules by allowing a stream of molten FeCr to fall down into a water bath in which the stream is split up into granules by means of a concentrated water jet located immediately below the surface of the water bath. The shots are from 2-20 mm in size and irregular shaped.

US 6287362 discloses a method of producing metal lumps of ferroalloys such as ferrochromium having a characteristic dimension of 20 - 100 mm by introducing a molten metal stream into a stream of water. Drawbacks associated with this method are long dissolution times for the coarse material and a wide particle size distribution.

### SUMMARY OF THE INVENTION

The general object of the present invention is to provide a granulated ferrochromium material having improved properties for the alloying of steel and iron melts. A particular object is to provide a ferrochromium material resulting in time and energy savings when used for alloying, in particular it should result in a better performance in the Electric Arc Furnace (EAF).

Another object is to provide a method for making such an improved granulated ferrochromium material. In particular, it should be possible to obtain a mean size that allows a rapid dissolution and/or melting, when the material is added to a melt.

This and other objects are achieved by means of the method and product defined in the independent claims.

Further advantageous embodiments of the invention are specified in the dependent claims.

According to the invention the composition of the ferrochromium may be adjusted to have a composition close to the eutectic, such that the melting temperature of the ferrochromium can be adjusted to e.g. 1400-1450 °C, which is lower than the temperature of the steel melt to which the alloy is added. As a result, the time for homogenisation of the melt may be reduced.

According to a preferred embodiment of the invention the granulation is performed with the aid of a rotating distributor, which comprises an upper inlet opening, sidewalls, a bottom and at least one row of openings at the lower end of the sidewalls, wherein the openings in the sidewalls have a size of at least 5 mm in the smallest dimension.

The invention is defined in the claims.

### BRIEF DESCRIPTION OF THE FIGURE

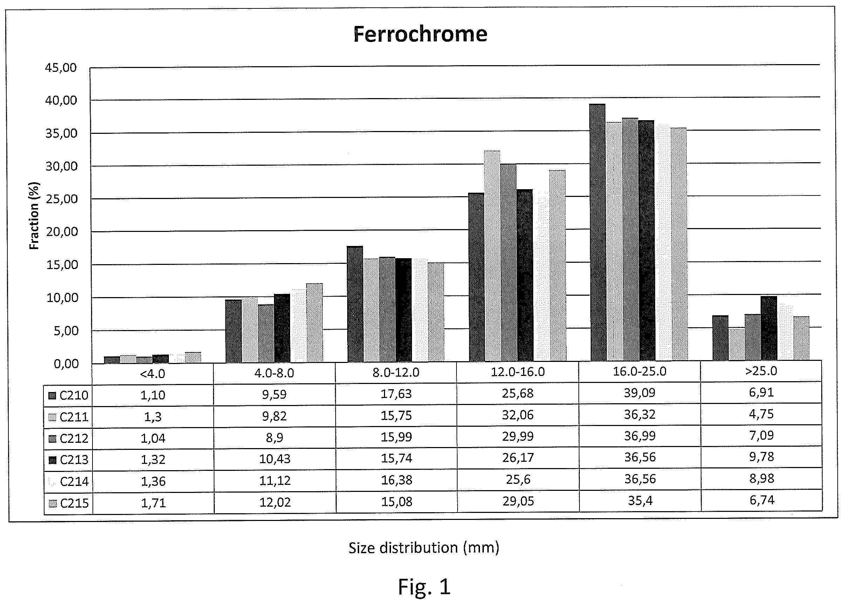

Fig. 1 discloses the size distribution of the ferrochromium granules obtained in the Example.

### DETAILED DESCRIPTION OF THE INVENTION

The present invention provides a granulated ferrochromium material having a mean size in the range of 12-50 mm, wherein the amount of fines with a size of less than 4 mm is limited to ≤7%, preferably ≤ 5%, more preferably ≤ 3%, most preferably ≤ 1.5%. The material is hard and has an edgy appearance. It is a one-phase material with a homogeneous composition. It has a low amount of fines and is therefore ideal for automatic handling.

The composition of the material can be adjusted according to the needs. A Si content of < 0.5% results in less need for slag formers and less slag formation. The Si content can be reduced down to 0.01%. The melting temperature can be reduced to e.g. 1400 - 1450 °C by adjusting the carbon and chromium contents. In EAF-steelmaking, the added ferrochromium melts during meltdown, which results in a reduced processing time as well as an improved chemical homogeneity of the steel melt.

The apparatus for producing the granulated ferrochromium material comprises:
a) a cooling tank containing a cooling fluid,
b) a means for feeding the liquid material to a rotating distributor,
c) a rotating distributor positioned above the cooling tank,
d) the rotating distributor comprises an upper inlet opening, sidewalls, a bottom and at least one row of openings at the lower end of the sidewalls, wherein the openings in the sidewalls have a size of at least 5 mm in the smallest dimension.

The means for feeding the liquid material to the rotating distributor is positioned above the tank, preferably the tank is provided with cylindrical sidewalls and the feeding means is positioned at the centreline of said cylindrical sidewalls. The distributor can be made of a refractory material like alumina, magnesia or dolomite. The rotating distributor can be comprised of a tundish having an elongated nozzle attached thereto, wherein the basic design of the nozzle is similar to that of an immersion nozzle used for the continuous casting of steel. The feeding means is positioned at the centreline of said cylindrical sidewalls, the rotating distributor comprises a circular tundish and an elongated nozzle attached centrally thereto. The elongated nozzle has not more than 4 circular openings having a diameter of 10-20 mm in one row, optionally there is provided an intermediate receptor or a chute for supplying a controlled amount of liquid material to the tundish.

Another possibility is that the rotating distributor comprises a pot attached to a rotating means provided within the tank, the rotating pot has cylindrical sidewalls and, preferably, only one row of opening in the sidewalls and optionally an annular top flange. The means for feeding the liquid material to the rotating distributor may be positioned above the tank, which may be provided with cylindrical sidewalls.

The apparatus may be provided with a weighing system for the tundish that automatically controls the level in the tundish in order to maintain a constant liquid head and thereby a constant flow rate through the nozzle. Alternatively, the automatic control system may include optical or electromagnetic sensors.

The method of producing granulated material by disintegrating liquid metal or slag comprises the steps of:
a) providing a ferrochromium melt having a composition as defined in the claims,
b) feeding the molten ferrochromium material to the rotating distributor,
c) disintegrating the molten material above and/or within the cooling liquid and forming at least partly solidified granules,
d) solidifying the disintegrated melt within the cooling water,
e) recovering the granulated material from the bottom of the cooling tank.

By this method there is obtained a granulated ferrochromium material having a mean size in the range of 12-50 mm, wherein the amount of fines with a size of less than 4 mm is limited to 7 ≤ %, preferably ≤ 5% most preferably ≤ 3% of the total weight.

Preferably, the amount of granules having a size ≥ 16 mm is ≥ 40%, preferably ≥ 45% of the total weight.

In a preferred embodiment the method for producing granulated material comprises at least one of the following features:
- Rotating the distributor at a speed of 1-50 rpm. A low rotation speed is easy to control and it would appear to have a positive influence on the confinement of the molten stream. On the other hand, a higher rotational speed is preferred for heat dissipation reasons if the number of outlets is low. Hence, the rotational speed may be freely limited with the claimed range, e.g. 2-6 rpm, 4-12 rpm or 8 - 20.
- Feeding the molten material at a rate of 0.5 - 10 t/min, preferably 1-5 t/min. These feeding rates may be applied in high capacity plants. However, lower feeding rates are possible for small units and for pilot plant applications.
- Circulating cooling water in the tank, preferably in the same or opposite direction with respect to the rotating means. By controlling the circulation of the cooling water in the tank it is possible to secure a uniform cooling. A water stream that is in the opposite direction to the stream from the rotating distributor results in a higher cooling rate but also to higher drag forces at the liquid interface. Hence, it may be possible to partly influence the geometrical form of the granules by controlling the direction and velocity of the cooling water.
- Adjusting the height distance between the cooling water in the tank to the openings in the rotating distributor to be 0.1-1.5 m. This design parameter can be used to adjust the radial distance from the distributor to the annular region, where the molten stream hits the cooling liquid as discussed in EP 402 665.
- Controlling the melt level in the tundish and/or in the rotating distributor by controlling the flow from the means for feeding the liquid material to a rotating distributor. This is made in order to control the liquid head and thereby also the liquid flow through the nozzle.
- Controlling the rate of granulation by controlling the level of the melt in the tundish and/or in the rotating distributor. This is a convenient method because an increased liquid head results in a higher flow through the nozzle.
- Recovering the solidified ferrochromium granules by discharging from the lower end of the tank using a water and air ejector. This method is disclosed in WO2009/157857 and is considered to be the most suitable method. However, it is also possible to use other methods for recovering the granulated material.

The invention is not to be seen as limited by the embodiments described above, but can be varied within the scope of the claims, as will be understood by the person skilled in the art.

### EXAMPLE

In the following example results are disclosed, which are obtained according to the method of the present invention. The ferrochromium alloy was melted in a 300 kg induction furnace by mixing FeCr and steel scrap. The melt was supplied to the tundish by the use of a tapping spout. The tapping temperature was 1660 - 1680 °C °C. The melt level in the tundish was manually controlled to be 300-400 mm. After completed granulation the granules were removed from the tank, dried and subjected to screening. The screen had the corresponding square openings. Size classes used were < 4 mm, 4-8 mm, 8-12mm, 12-16 mm, 16-25 mm and > 25 mm. The results are given in % of the total weight.

In the example results from six runs (C210-C215) are reported.

The ferrochromium contained 68,7% Cr, 5,8% C and 0.69% Si, 0.15% Mn balance Fe apart from impurities.

Two different rotation speeds were used. Runs C210, C212 and C214 were performed at 4,7 rpm and runs C211, C213 and C215 were performed at 10,6 rpm in order to secure a uniform heat dissipation.

The nozzle attached to the tundish had one opening, which was directed 10° downwards in for all runs. A diameter of 24 mm was used for the runs C210 and C211. Rectangular openings 29x16 mm was used for runs C212 and D213. Rectangular openings 39x10 mm were used for the runs C214 and C215.

The size distribution of the ferrochromium granules obtained is disclosed in Fig. 1.

Fig. 1 reveals that the size distribution is excellent in that the amount of fines (< 4mm) is very low, in all cases below 2%. The mean size is high extraordinary high. More than 40% of the granules have a size of more than 16 mm.

In the figure the obtained fraction for each run is disclosed on the vertical axis and the size classes < 4 mm, 4-8 mm, 8-12mm, 12-16 mm, 16-25 mm and > 25 mm are disclosed on the horizontal axis.

The composition of the ferrochromium can be adjusted according to the needs. The melting temperature can be reduced to 1400-1450 °C by adjusting the carbon and chromium contents. A typical composition according to the invention for this purpose is 55%Cr, 3.8%C and < 0.3

%Si. This material melts quicker than conventional ferrochromium and results in shorter processing times and a lower tapping temperature. Hence, it leads to time and energy savings as well as to an improved productivity and a more reliable process.

## Claims

1. A method of producing ferrochromium by granulation of a melt comprising the steps of:
providing a ferrochromium melt having the following composition in weight %:
C 1-9
Cr 25-70
Si ≤ 2.0
Fe balance apart from not more than 3 % of other elements,
feeding the melt to a distribution unit, wherein the distribution unit includes a rotating distributor positioned above the cooling water and wherein the rotating distributor comprises an upper inlet opening, sidewalls, a bottom and at least one row of openings at the lower end of the sidewalls, wherein the openings in the sidewalls have a size of at least 5 mm in the smallest dimension,
subjecting the melt to granulation by disintegrating the melt above and/or within cooling water held in a cooling tank,
solidifying the disintegrated melt within the cooling water,
thereby obtaining a granulated ferrochromium material having a mean size in the range of 12-50 mm, wherein the amount of fines having a size of less than 4 mm is limited to ≤ 7%.

2. A method according to claim 1, wherein the method comprises at least one of the following features:
- distributing at least one stream of the molten ferrochromium over the cooling fluid in the cooling tank,
- rotating the distributor at a speed of 1-50 rpm,
- feeding the molten material at a rate of 0.5 - 10 t/min, preferably 1-5 t/min,
- circulating cooling water in the tank, preferably in the same or opposite direction with respect to the rotating means,
- adjusting the height distance between the cooling water in the tank to the openings in the rotating distributor to be 0.1-1.5 m,
- controlling the melt level in the rotating distributor by controlling the flow of the liquid material to a rotating distributor,
- controlling the rate of granulation by controlling the level of the melt in the rotating distributor,
- recovering the solidified granules by discharging them from the lower end of the tank using a water and air ejector,
- controlling the rate of granulation by controlling the level of the liquid ferrochromium in the rotating distributor.

3. A method according to any of the preceding claims fulfilling at least one of the following requirements in wt%:
| | | |
|---|---|---|
| C | 2 - 5, | preferably 3.5 - 4, |
| Cr | 45 - 60, | preferably 52 - 58, |
| Si | ≤ 1.0, | preferably ≤ 0.5, |
and the amount of other elements is ≤ 1%.

4. A method according to any of the preceding claims fulfilling at least one of the following requirements in wt%:
| | | |
|---|---|---|
| C | 3.5 - 4, | preferably 3.7 - 3.9, |
| Cr | 53 - 57, | preferably 54 - 56, |
| Si | ≤ 0.15, | preferably 0.01-0.10, |
and the amount of other elements is ≤ 0.5, preferably ≤ 0.1.

5. A method according to any of the preceding claims fulfilling at least one of the following requirements:
- a mean size of the granulated ferrochromium in the range of 12 - 25 mm,
- ≤ 5% fines having a size of less than 4 mm,
- ≥ 4% of the granules having a size ≥ 25 mm,
- a melting temperature of the ferrochromium in the range of 1300 -1500 °C, preferably 1400 -1450 °C,
- the amount of other element is limited to the impurity content.

6. A method according to any of claims 1-3 or 5 comprising the following features the ferrochromium melt has the composition in wt%:
C 4-5
Cr 53 - 57
Si ≤ 0.5

7. A granulated ferrochromium material obtainable with any of the preceding claims, wherein the material has the following composition in wt%:
C 2-5
Cr 25 - 70
Si ≤ 1.0
Fe balance apart from not more than 3 % of other elements,
and a mean size in the range of 12-25 mm wherein the amount of fines having a size of less than 4 mm is limited to ≤ 7%.

8. A granulated ferrochromium material according to claim 7, wherein the material fulfils at least one of the following requirements:
Fe balance apart from not more than 1 wt% of other elements,
and a mean size in the range of 12-25 mm wherein the amount of fines having a size of less than 4 mm is limited to ≤ 5%, preferably ≤ 3%.

9. A granulated ferrochromium material according to claim 7, wherein the material fulfils at least one of the following requirements in wt% for what concerns the composition:
| | | |
|---|---|---|
| C | 3.5 - 5, | preferably 3.5 - 4, |
| Cr | 45 - 60, | preferably 52 - 58, |
Si ≤ 0.5,
other elements ≤ 1, preferably ≤ 0.5,
- a mean size of the granulated ferrochromium in the range of 12 - 25 mm,
- ≤ 5% fines having a size of less than 4 mm,
- ≥ 4 % of the granules having a size ≥ 25 mm,
- a melting temperature of the ferrochromium in the range of 1300 -1500 °C, preferably 1400 -1450 °C,
- the amount of other element is limited to the impurity content.

10. A granulated ferrochromium material according to claim 7, wherein the material fulfils at least one of the following requirements in wt% for what concerns the composition:
| | | | |
|---|---|---|---|
| C | 4 - 5 | | |
| Cr | 53 - 57 | | |
| Si | ≤ 0.5 | | |
| other elements | ≤ 1, | preferably | ≤ 0.5, |
- a mean size of the granulated ferrochromium in the range of 12 - 25 mm,
- ≤ 5% fines having a size of less than 4 mm,
- ≥ 4 % of the granules having a size ≥ 25 mm,
- a melting temperature of the ferrochromium in the range of 1300 -1500 °C, preferably 1400 -1450 °C,
- the amount of other element is limited to the impurity content.

## Patentansprüche

1. Verfahren zur Herstellung von Ferrochrom durch Granulation einer Schmelze, umfassend die Schritte von:
Bereitstellung einer Ferrochromschmelze mit der folgenden Zusammensetzung in Gew.-%:
C 1-9
Cr 25-70
Si ≤ 2,0
Fe Rest abgesehen von nicht mehr als 3 % anderer Elemente,
Zuführen der Schmelze zu einer Verteilereinheit, wobei die Verteilereinheit einen rotierenden Verteiler umfasst, der über dem Kühlwasser positioniert ist, und wobei der rotierende Verteiler eine obere Einlassöffnung, Seitenwände, einen Boden und wenigstens eine Reihe von Öffnungen an dem unteren Ende der Seitenwände umfasst, wobei die Öffnungen in den Seitenwänden eine Größe von wenigstens 5 mm in der kleinsten Abmessung aufweisen,
Unterziehen der Schmelze der Granulation durch Zersetzen der Schmelze über und / oder in Kühlwasser, das in einem Kühltank gehalten wird,
Erstarren der zersetzten Schmelze in dem Kühlwasser,
wodurch ein granuliertes Ferrochrommaterial mit einer mittleren Größe in dem Bereich von 12-50 mm erhalten wird, wobei die Menge an Feinteilen mit einer Größe von weniger als 4 mm auf ≤ 7 % begrenzt ist.

2. Verfahren nach Anspruch 1, wobei das Verfahren wenigstens eines der folgenden Merkmale umfasst:
- Verteilen wenigstens eines Stroms des geschmolzenen Ferrochroms über das Kühlfluid in dem Kühltank,
- Rotieren des Verteilers mit einer Geschwindigkeit von 1-50 U/min,
- Zuführen des geschmolzenen Materials mit einer Rate von 0,5-10 t/min, bevorzugt 1-5 t/min,
- Zirkulieren des Kühlwassers in dem Tank, bevorzugt in der gleichen oder entgegengesetzten Richtung in Bezug auf die rotierenden Mittel,
- Einstellen des Höhenabstands zwischen dem Kühlwasser in dem Tank zu den Öffnungen in dem rotierenden Verteiler auf 0,1-1,5 m,
- Steuerung des Schmelze-Niveaus in dem rotierenden Verteiler durch Steuerung des Flusses des flüssigen Materials zu einem rotierenden Verteiler,
- Steuerung der Rate der Granulation durch Steuerung des Niveaus der Schmelze in dem rotierenden Verteiler,
- Rückgewinnung des verfestigten Granulats durch Abführen von diesem aus dem unteren Ende des Tanks unter Verwendung eines Wasser- und Luftejektors,
- Steuerung der Granulationssrate durch Steuerung des Niveaus des flüssigen Ferrochroms in dem rotierenden Verteiler.

3. Verfahren nach einem der vorhergehenden Ansprüche, das wenigstens eine der folgenden Anforderungen in Gew.-% erfüllt:
C 2-5, bevorzugt 3,5-4,
Cr 45-60, bevorzugt 52-58,
Si ≤ 1,0, bevorzugt ≤ 0,5,
und die Menge anderer Elemente ist ≤ 1%.

4. Verfahren nach einem der vorhergehenden Ansprüche, das wenigstens eine der folgenden Anforderungen in Gew.-% erfüllt:
C 3,5-4, bevorzugt 3,7-3,9,
Cr 53-57, bevorzugt 54-56,
Si ≤ 0,15, bevorzugt 0,01-0,10,
und die Menge anderer Elemente ist ≤ 0,5, bevorzugt ≤ 0,1.

5. Verfahren nach einem der vorhergehenden Ansprüche, das wenigstens eine der folgenden Anforderungen erfüllt:
- eine mittlere Größe des granulierten Ferrochroms in dem Bereich von 12-25 mm,
- ≤ 5% Feinteile mit einer Größe von weniger als 4 mm,
- ≥ 4% des Granulats mit einer Größe ≥ 25 mm,
- eine Schmelztemperatur des Ferrochroms in dem Bereich von 1300-1500 °C, bevorzugt 1400-1450 °C,
- die Menge des anderen Elements ist auf den Gehalt an Verunreinigungen beschränkt.

6. Verfahren nach einem der Ansprüche 1-3 oder 5, umfassend die folgenden Merkmale, wobei die Ferrochromschmelze die Zusammensetzung in Gew.-% aufweist:
C 4-5
Cr 53-57
Si ≤ 0,5

7. Granuliertes Ferrochrommaterial, erhältlich nach einem der vorhergehenden Ansprüche, wobei das Material die folgende Zusammensetzung in Gew.-% aufweist:
C 2-5
Cr 25-70
Si ≤ 1,0
Fe Rest abgesehen von nicht mehr als 3 % anderer Elemente,
und eine mittlere Größe in dem Bereich von 12-25 mm, wobei die Menge an Feinteilen mit einer Größe von weniger als 4 mm auf ≤ 7% begrenzt ist.

8. Granuliertes Ferrochrommaterial nach Anspruch 7, wobei das Material wenigstens eine der folgenden Anforderungen erfüllt:
Fe Rest abgesehen von nicht mehr als 1 Gew.-% anderer Elemente,
und eine mittlere Größe in dem Bereich von 12-25 mm, wobei die Menge an Feinteilen mit einer Größe von weniger als 4 mm auf ≤ 5%, bevorzugt ≤ 3%, begrenzt ist.

9. Granuliertes Ferrochrommaterial nach Anspruch 7, wobei das Material wenigstens eine der folgenden Anforderungen in Gew.-% erfüllt was die Zusammensetzung betrifft:
C 3,5-5, bevorzugt 3,5-4,
Cr 45-60, bevorzugt 52-58,
Si ≤ 0,5,
andere Elemente ≤ 1, bevorzugt ≤ 0,5,
- eine mittlere Größe des granulierten Ferrochroms in dem Bereich von 12-25 mm,
- ≤ 5% Feinteile mit einer Größe von weniger als 4 mm,
- ≥ 4% des Granulats mit einer Größe ≥ 25 mm,
- eine Schmelztemperatur des Ferrochroms in dem Bereich von 1300-1500 °C, bevorzugt 1400-1450 °C,
- die Menge des anderen Elements ist auf den Gehalt an Verunreinigungen beschränkt.

10. Granuliertes Ferrochrommaterial nach Anspruch 7, wobei das Material wenigstens eine der folgenden Anforderungen in Gew.-% erfüllt was die Zusammensetzung betrifft:
C 4-5
Cr 53-57
Si ≤ 0,5
andere Elemente ≤ 1, bevorzugt ≤ 0,5,
- eine mittlere Größe des granulierten Ferrochroms in dem Bereich von 12-25 mm,
- ≤ 5 % Feinteile mit einer Größe von weniger als 4 mm,
- ≥ 4 % des Granulats mit einer Größe ≥ 25 mm,
- eine Schmelztemperatur des Ferrochroms in dem Bereich von 1300-1500 °C, bevorzugt 1400-1450 °C,
- die Menge des anderen Elements ist auf den Gehalt an Verunreinigungen beschränkt.

## Revendications

1. Un procédé de production de ferrochrome par granulation d'une masse fondue, comprenant les étapes consistant à :
mettre en œuvre une masse fondue de ferrochrome ayant la composition suivante en % en poids :
C de 1 à 9
Cr de 25 à 70
Si ≤ 2.0
Fe pour le reste, à l'exception de pas plus de 3% d'autres éléments,
alimenter la masse fondue à une unité de distribution, l'unité de distribution comprenant un distributeur rotatif positionné au-dessus de l'eau de refroidissement et le distributeur rotatif comprenant une ouverture d'entrée supérieure, des parois latérales, un fond et au moins une rangée d'ouvertures à l'extrémité inférieure des parois latérales, les ouvertures dans les parois latérales ayant une dimension d'au moins 5 mm dans la plus petite dimension,
soumettre la masse fondue à une granulation en désintégrant la masse fondue au-dessus et/ou dans de l'eau de refroidissement contenue dans une cuve de refroidissement,
solidifier la masse fondue désintégrée dans l'eau de refroidissement,
obtenir ainsi un matériau ferrochrome granulé ayant une taille moyenne comprise entre 12 et 50 mm, la quantité de fines qui ont une taille inférieure à 4 mm étant limitée à ≤ 7%.

2. Un procédé selon la revendication 1, dans lequel le procédé comprend au moins l'une des caractéristiques suivantes :
- distribuer au moins un flux du ferrochrome fondu sur le fluide de refroidissement dans la cuve de refroidissement,
- opérer une rotation du distributeur à une vitesse de 1 à 50 tr/min,
- alimenter de la matière fondue à raison de 0,5 à 10 t/min, de préférence de 1 à 5 t/min,
- faire circuler de l'eau de refroidissement dans la cuve, de préférence dans le même sens ou dans le sens opposé par rapport aux moyens de rotation,
- régler la distance en hauteur entre l'eau de refroidissement dans la cuve et les ouvertures dans le distributeur rotatif pour qu'elle aille de 0,1 à 1,5 m,
- commander le niveau de masse fondue dans le distributeur rotatif en commandant l'écoulement de la matière liquide vers un distributeur rotatif,
- commander la vitesse de granulation en commandant le niveau de la matière fondue dans le distributeur rotatif,
- récupérer les granulés solidifiés en les évacuant par l'extrémité inférieure de la cuve en utilisant un éjecteur d'eau et d'air,
- commander la vitesse de granulation en commandant le niveau du ferrochrome liquide dans le distributeur rotatif.

3. Un procédé selon l'une quelconque des revendications précédentes remplissant au moins l'une des exigences suivantes en % en poids :
| | | |
|---|---|---|
| C | de 2 à 5, | de préférence de 3,5 à 4, |
| Cr | de 45 à 60, | de préférence de 52 à 58, |
| Si | ≤ 1,0, | de préférence ≤ 0,5, |
et la quantité d'autres éléments est ≤ 1%.

4. Un procédé selon l'une quelconque des revendications précédentes remplissant au moins l'une des exigences suivantes en % en poids :
| | | |
|---|---|---|
| C | de 3,5 à 4, | de préférence de 3,7 à 3,9, |
| Cr | de 53-57, | de préférence de 54 à 56, |
| Si | ≤ 0,15, | de préférence de 0,01 à 0,10, |
et la quantité d'autres éléments est ≤ 0,5, de préférence de ≤ 0,1.

5. Un procédé selon l'une quelconque des revendications précédentes remplissant au moins l'une des exigences suivantes :
- une taille moyenne du ferrochrome granulé est comprise entre 12 et 25 mm,
- ≤ 5% de fines ayant une taille inférieure à 4 mm,
- ≥ 4% des granulés ayant une taille ≥ 25 mm,
- une température de fusion du ferrochrome comprise entre 1300 et 1500°C, de préférence entre 1400 et 1450°C,
- la quantité d'autres éléments est limitée à la teneur en impuretés.

6. Un procédé selon l'une quelconque des revendications 1 à 3 ou 5, comprenant les caractéristiques suivantes, le ferrochrome fondu ayant la composition en % en poids :
| | |
|---|---|
| C | de 4 à 5 |
| Cr | de 53 à 57 |
| Si | ≤ 0,5. |

7. Un matériau ferrochrome granulé apte à être obtenu avec l'une quelconque des revendications précédentes, le matériau ayant la composition suivante en % en poids :
| | |
|---|---|
| C | de 2 à 5 |
| Cr | de 25 à 70 |
| Si | ≤ 1,0 |
| Fe | pour le reste, à l'exception de pas plus de 3 % d'autres éléments, |
et une taille moyenne comprise entre 12 et 25 mm, la quantité de fines qui ont une taille inférieure à 4 mm étant limitée à ≤ 7%.

8. Un matériau ferrochrome granulé selon la revendication 7, dans lequel le matériau remplit au moins l'une des exigences suivantes :
Fe pour le reste, à l'exception de pas plus de 1% en poids d'autres éléments,
et une taille moyenne comprise entre 12 et 25 mm, la quantité de fines qui ont une taille inférieure à 4 mm étant limitée à ≤ 5%, de préférence ≤ 3%.

9. Un matériau ferrochrome granulé selon la revendication 7, dans lequel le matériau remplit au moins l'une des exigences suivantes en % en poids pour ce qui concerne la composition :
| | | |
|---|---|---|
| C | de 3,5 à 5, | de préférence de 3,5 à 4, |
| Cr | de 45 à 60, | de préférence de 52 à 58, |
| Si | ≤ 0,5, | |
| autres éléments | ≤ 1, | de préférence ≤ 0,5, |
- une taille moyenne du ferrochrome granulé comprise entre 12 et 25 mm,
- ≤ 5% de fines ayant une taille inférieure à 4 mm,
- ≥ 4% des granulés ayant une taille ≥ 25 mm,
- une température de fusion du ferrochrome comprise entre 1300 et 1500°C, de préférence entre 1400 et 1450°C,
- la quantité d'autres éléments est limitée à la teneur en impuretés.

10. Un matériau ferrochrome granulé selon la revendication 7, dans lequel le matériau remplit au moins l'une des exigences suivantes en % en poids pour ce qui concerne la composition :
| | |
|---|---|
| C | de 4 à 5 |
| Cr | de 53 à 57 |
| Si | ≤ 0,5, |
autres éléments ≤1, de préférence ≤ 0,5,
- une taille moyenne du ferrochrome granulé comprise entre 12 et 25 mm,
- ≤ 5% de fines ayant une taille inférieure à 4 mm,
- ≥ 4% des granulés ayant une taille ≥ 25 mm,
- une température de fusion du ferrochrome comprise entre 1300 et 1500°C, de préférence entre 1400 et 1450°C,
- le montant des autres éléments est limité à la teneur en impuretés.
